# FASCICULE DE BREVET EUROPEEN

(11) **EP 0 786 434 B1**
(45) Date de publication et mention de la délivrance du brevet: **26.04.2000**
(21) Numéro de dépôt: 97400149.7
(22) Date de dépôt: 23.01.1997
(51) Int. Cl.: C01C 1/18, C06B 31/28, C05C 1/02

(54) **Nitrate d'ammonium stabilisé**
Stabilisiertes Ammoniumnitrat
Stabilised ammonium nitrate

(30) Priorité: 24.01.1996 FR 9600778
(43) Date de publication de la demande: 30.07.1997
(73) Titulaire: SOCIETE NATIONALE DES POUDRES ET EXPLOSIFS, F-75181 Paris Cédex 04 (FR)
(72) Inventeur: Berteleau, Gérard, 91130 Ris Orangis (FR); Mondet, Jean-Claude, 91810 Vert Le Grand (FR)

(56) Documents cités:
- DD-A- 291 977
- FR-A- 2 701 860
- GB-A- 627 680
- GB-A- 2 112 372
- US-A- 3 018 164
- US-A- 4 124 368
- CHEMICAL ABSTRACTS, vol. 123, no. 2, 10 Juillet 1995 Columbus, Ohio, US; abstract no. 13120, L. GUAN ET AL.: "Powdered emulsion explosive and its manufacture." XP002014632 & CN 1 085 202 A (13.4.94)

## Description

La présente invention est relative au nitrate d'ammonium stabilisé.

Elle se situe essentiellement dans le domaine de la pyrotechnie, plus particulièrement dans celui des propergols.

Le nitrate d'ammonium, composé peu onéreux et peu sensible aux agressions extérieures, est, depuis fort longtemps, utilisé comme charge explosive ou oxydante dans les compositions pyrotechniques.

Il ne peut toutefois pas être utilisé tel quel dans les compositions propulsives ou explosives en raison de l'existence d'un point de transition à 32°C, avec changement de forme cristalline accompagné d'une variation de volume, ce qui provoque des décohésions lors des cyclages thermiques des matériaux formulés.

Les oxydes métalliques généralement préconisés pour supprimer cet inconvénient, tels que ZnO, NiO ou CuO, ne permettent pas de résoudre le problème de façon satisfaisante car leur présence entraîne d'autres inconvénients tels que toxicité, vie de pot diminuée ou hygroscopicité exacerbée.

Il est également bien connu de l'homme du métier que la présence du nitrate de potassium, en solution solide avec le nitrate d'ammonium, permet de supprimer le point de transition précité, mais il n'est efficace qu'à partir d'un taux de 10% environ, ce qui diminue considérablement les performances du matériau énergétique.

Le brevet US 3 018 164 propose une méthode permettant de stabiliser le nitrate d'ammonium, c'est à dire de supprimer le point de transition à 32°C précité, par la présence de nitrate de potassium à des teneurs inférieures à 8%, de préférence comprises entre 3,3% et 5%.

Cette méthode comporte toutefois de nombreuses étapes dont certaines sont complexes. Elle est longue, coûteuse, difficilement extrapolable au stade industriel.

L'homme du métier est en conséquence toujours à la recherche d'une solution vraiment satisfaisante pour stabiliser le nitrate d'ammonium, c'est à dire notamment une solution qui ne procure pas d'autres inconvénients, tels que ceux précités, tout aussi fâcheux que celui surmonté.

La présente invention propose une telle solution.

Il a été découvert, de façon fort surprenante, que la présence d'une très faible quantité, 0,2% par exemple, de certains colorants organiques en association avec le nitrate de potassium, permet la suppression du point de transition à 32°C du nitrate d'ammonium pour seulement quelques %, 2% ou 3% par exemple, de nitrate de potassium, alors que ce résultat est habituellement obtenu pour un taux de 10% à 15% de nitrate de potassium.

L'intérêt de l'invention est évident :
- le taux de 3% de KNO₃ est le même que celui des additifs oxydes métalliques habituellement préconisés (ZnO, NiO, CuO,...), mais sans les inconvénients précités liés à la présence de ces oxydes.
- Une teneur de quelques ‰ d'additif organique permet de rester en deçà du seuil à partir duquel le nitrate d'ammonium est considéré comme présentant un danger (0,2% en carbone).
- La méthode de stabilisation est très simple, peu coûteuse, facilement extrapolable au stade industriel. Il suffit d'ajouter le colorant lors de la réalisation, en solution ou en masse fondue, du mélange KNO₃-NH₄NO₃.

Il a été en outre constaté, de façon tout aussi surprenante, que le nitrate d'ammonium ainsi stabilisé perdait plus facilement son eau résiduelle, et qu'on obtenait directement un produit pulvérulent brut de synthèse suffisamment sec (teneur en eau inférieure à 0,04%) pour ne pas s'agglomérer au stockage.

Il est bien connu de l'homme du métier d'ajouter au nitrate d'ammonium des modificateurs de faciès de type colorants présentant un groupement aromatique sulfoné.

Le brevet français n° 59432 d'addition au brevet FR 1 004 894 décrit par exemple une telle application.

Si les modificateurs de faciès ont une influence sur la forme des cristaux obtenus à la recristallisation en s'absorbant sur certaines faces, ce qui bloque la croissance, et sont utilisés, notamment dans le nitrate d'ammonium, comme agents antimottants, une éventuelle influence de tels composés, seuls ou en combinaison avec d'autres, sur le point de transition à 32°C du nitrate d'ammonium, n'était aucunement décrite ou suggérée.

La présente invention a donc tout d'abord pour objet un nouveau nitrate d'ammonium stabilisé par le nitrate de potassium, caractérisé en ce qu'il comprend entre 1% et 7% en poids de nitrate de potassium et entre 0,1% et 1% en poids d'un colorant organique comportant au moins un groupement arylsulfonate choisi dans le groupe constitué par le magenta acide et l'amarante.

Sauf mention contraire, les pourcentages mentionnés dans la présent demande doivent se comprendre relatifs au nitrate d'ammonium stabilisé, c'est à dire au mélange nitrate d'ammonium-nitrate de potassium-colorant.

Compte-tenu de la très faible quantité de colorant, et de la faible quantité de KNO₃, on pourra, en première approximation, aussi considérer les mêmes pourcentages relatifs au mélange KNO₃-NH₄NO₃, et, en seconde approximation, aussi considérer les mêmes pourcentages relatifs au seul NH₄NO₃.

De façon préférée, la teneur en KNO₃ est comprise entre 2% et 5% en poids, mieux encore entre 2,5% et 3,5%, par exemple environ 3% en poids.

De façon également préférée, la teneur en colorant organique est comprise entre 0,15% et 0,5% en poids, par exemple environ 0,2% en poids.

Dans le cadre de la présente invention, les colorants organiques sont le magenta acide, encore appelé rubine S, qui est un dérivé trisulfoné de la fuschine, et dont la formule est : 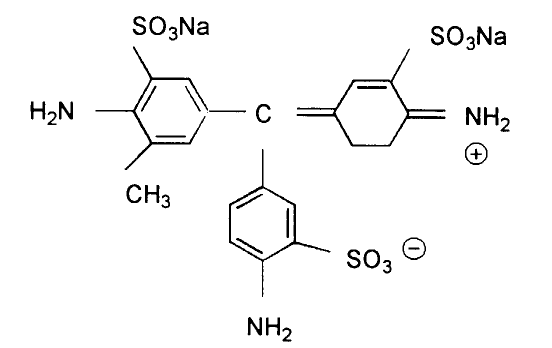 et l'amarante, de formule :

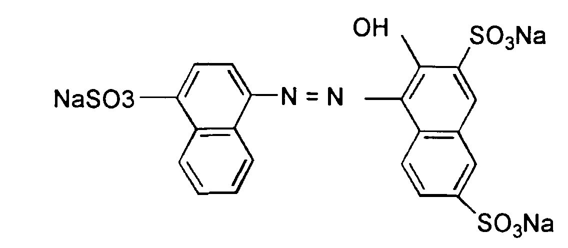

Pour obtenir le nitrate d'ammonium stabilisé selon l'invention, on peut par exemple incorporer le nitrate de potassium et le colorant organique au nitrate d'ammonium, soit par mélange dans le nitrate d'ammonium fondu, soit par mise en solution aqueuse des constituants, suivie d'une évaporation de l'eau.

Dans le cadre d'une évaporation traditionnelle, ou selon la méthode par fusion, le produit solide obtenu doit ensuite être broyé pour obtenir la granulométrie désirée.

On peut aussi, de façon préférée, atomiser en aérosol la solution aqueuse, puis obtenir directement une poudre par séchage de cet aérosol.

En conséquence de ce qui précède, la présente invention a également pour objet un nouveau procédé pour supprimer le point de transition à 32°C du nitrate d'ammonium par incorporation de nitrate de potassium, caractérisé en ce qu'on incorpore entre 1% et 7% en poids de nitrate de potassium et entre 0,1% et 1% en poids d'un colorant organique comportant au moins un groupement arylsulfonate choisi dans le groupe constitué par le magenta acide et l'amarante.

Ce nouveau procédé permet d'obtenir le nouveau nitrate d'ammonium stabilisé selon l'invention.

Les exemples non limitatifs suivants illustrent l'invention et les avantages qu'elle procure.

### Exemples 1 à 4 : Nitrate d'ammonium stabilisé par le nitrate de potassium et le magenta acide - Méthode par fusion.

### Exemple 1

Dans un réacteur thermostatique de 100ml équipé d'une agitation magnétique, d'une sonde de température, d'un balayage d'azote et d'une vanne de fond, on place 100g de nitrate d'ammonium que l'on porte à l'état de fusion, puis on verse 3,10g de nitrate de potassium et 0,2g de magenta acide.

Après dissolution et obtention d'une solution limpide de couleur pourpre, on maintient l'agitation durant 0,5h, puis, par l'intermédiaire de la vanne de fond, la solution est coulée sur une plaque métallique.

Après refroidissement sous atmosphère d'azote, le produit solide est broyé.

Sa teneur en eau est de 0,027%.

L'analyse dilatométrique, consistant à placer un échantillon sous forme de poudre en suspension dans le xylène et mesurer l'évolution du volume de cet échantillon au cours de l'augmentation de température entre la température ambiante et 80°C, montre la suppression du point de transition à 32°C, avec absence d'autres points de transition dans la plage de températures considérée.

### Exemples 2 à 4

On a suivi rigoureusement le même mode opératoire que pour l'exemple 1, mais avec des quantités différentes de nitrate de potassium et/ou de magenta acide :
- exemple 2 : 3,10g de nitrate de potassium et 0,5g de magenta acide
- exemple 3 : 5,3g de nitrate de potassium et 0,2g de magenta acide
- exemple 4 : 5,3g de nitrate de potassium et 0,5g de magenta acide

Comme pour l'exemple 1, l'analyse dilatométrique révèle, pour ces exemples 2 à 4, la suppression du point de transition à 32°C et l'absence d'autres points de transition dans la plage de températures considérée.

Pour le produit de l'exemple 2, on a également réalisé, entre - 60°C et + 180°C, à une vitesse de 5°C/min, une analyse thermique différentielle (ATD) qui montre, comparativement à la même analyse effectuée d'une part sur du nitrate d'ammonium pur et d'autre part sur un mélange de 100 g de nitrate d'ammonium et 3,10 g de nitrate de potassium, la quasi suppression du point de transition à 32°C.

Il faut noter que la présence seule de 3,10 g de KNO₃ dans 100 g de nitrate d'ammonium n'a que peu d'influence sur le point de transition à 32°C du nitrate d'ammonium pur.

Par ailleurs, la teneur en eau du produit broyé obtenu est de 0,039% pour l'exemple 2, de 0,023% pour l'exemple 3 et de 0,034% pour l'exemple 4.

### Exemples comparatifs A, B, C, D, E, F, G

Ces exemples comparatifs ne font pas partie de l'invention. Ils ont été réalisés dans le seul but de montrer la facilité de dessiccation du nitrate d'ammonium stabilisé selon l'invention, comparativement au nitrate d'ammonium connu, stabilisé par le nitrate de potassium, ou comportant un colorant sulfoné comme modificateur de faciès.

Pour ces exemples comparatifs, on a suivi rigoureusement le même mode opératoire que pour l'exemple 1, mais pour les exemples comparatifs A, B, C et D, il n'y a pas de magenta acide, et, pour les exemples E, F et G, il n'y a pas de nitrate de potassium.

De plus, pour les exemples comparatifs B, C et D, la quantité de nitrate d'ammonium est respectivement de 5,3g, 8,7g et 11,1g au lieu de 3,1g, et pour les exemples comparatifs E, F et G, la quantité de magenta acide est respectivement de 0,1g, 0,3g et 0,5g, au lieu de 0,2g.

La teneur en eau du produit broyé obtenu est la suivante :
exemple comparatif A : 0,13%
exemple comparatif B : 0,10%
exemple comparatif C : 0,11%
exemple comparatif D : 0,11%
exemple comparatif E : 0,079%
exemple comparatif F : 0,080%
exemple comparatif G : 0,066%

Si l'on compare avec la faible teneur en eau (0,027% à 0,039%) des produits obtenus selon l'invention aux exemples 1 à 4, on constate un effet de synergie sur la facilité de dessiccation lorsque le colorant et le nitrate de potassium sont simultanément présents, alors que la présence de l'un ou de l'autre ne procure pas cet effet technique.

### Exemples 5 à 13 : Nitrate d'ammonium stabilisé par le nitrate de potassium et l'amarante - Méthode par atomisation d'une solution aqueuse.

On prépare une solution aqueuse de nitrate d'ammonium à 50% en poids à laquelle sont ajoutés le nitrate de potassium et l'amarante, aux taux pondéraux respectifs suivants par rapport au nitrate d'ammonium :
Exemple 5 : 2% et 0,2%
Exemple 6 : 2% et 0,3%
Exemple 7 : 2% et 0,5%
Exemple 8 : 3% et 0,2%
Exemple 9 : 3% et 0,3%
Exemple 10 : 3% et 0,5%
Exemple 11 : 5% et 0,2%
Exemple 12 : 5% et 0,3%
Exemple 13 : 5% et 0,5%

La solution est introduite dans un atomiseur à l'aide d'une pompe péristaltique, à un débit de 800ml/h.

La pression d'azote utilisé pour atomiser la solution est de 3 10⁵Pa (3 bar) et la pression dans l'ensemble de l'appareillage, régulée par un dispositif d'aspiration, est de 0,24 10⁵Pa (0,25 bar), c'est à dire que l'appareillage est en dépression par rapport à la pression atmosphérique.

La température de l'air vecteur pour la dessiccation de l'aérosol est réglée à 150°C et celle de sortie (air chargé des particules de produit) est réglée à 100°C.

Le nitrate d'ammonium stabilisé en poudre est ensuite séparé de l'air vecteur dans un cyclone et récupéré au fond du cyclone.

L'analyse dilatométrique, effectuée comme mentionné pour les exemples 1 à 4, montre, pour tous les exemples 5 à 13, la suppression du point de transition à 32°C et l'absence d'autres points de transition dans la plage des températures considérée.

Pour l'exemple 10, on a également réalisé, entre - 60°C et + 180°C, à une vitesse de 5°C/min, une analyse thermique différentielle qui montre l'absence de tout point de transition dans la plage - 60°C/+ 100°C, donc la suppression du point de transition à 32°C, alors que la même analyse, effectuée dans les mêmes conditions opératoires, sur le nitrate d'ammonium pur, ou sur un mélange nitrate d'ammonium + 3% KNO₃, met bien en évidence ce point de transition.

## Revendications

1. Nitrate d'ammonium stabilisé par du nitrate de potassium, caractérisé en ce qu'il comprend entre 1% et 7% en poids de nitrate de potassium et entre 0,1% et 1% en poids d'un composé organique comportant au moins un groupement arylsulfonate choisi dans le groupe constitué par le magenta acide et l'amarante.

2. Nitrate d'ammonium stabilisé selon la revendication 1, caractérisé en ce qu'il comprend entre 2% et 5% en poids de nitrate de potassium et entre 0,15% et 0,5% en poids du composé organique arylsulfonate.

3. Procédé pour supprimer le point de transition à 32°C du nitrate d'ammonium par incorporation de nitrate de potassium, caractérisé en ce qu'on incorpore entre 1% et 7% en poids de nitrate de potassium et entre 0,1% et 1% en poids d'un composé organique comportant au moins un groupement arylsulfonate choisi dans le groupe constitué par le magenta acide et l'amarante.

4. Procédé selon la revendication 3, caractérisé en ce que l'incorporation du nitrate de potassium et du composé organique arylsulfonate est effectuée par mélange dans le nitrate d'ammonium fondu.

5. Procédé selon la revendication 3, caractérisé en ce que l'incorporation est effectuée par mise en solution aqueuse des constituants, puis évaporation de l'eau.

6. Procédé selon la revendication 5, caractérisé en ce qu'on atomise la solution aqueuse, puis sèche l'aérosol ainsi obtenu.

## Patentansprüche

1. Ammoniumnitrat, das mit Kaliumnitrat stabilisiert ist,
dadurch gekennzeichnet, daß
es 1 bis 7 Gew.-% Kaliumnitrat und 0,1 bis 1 Gew.-% einer organischen Verbindung enthält, die mindestens eine Arylsulfonatgruppe aufweist und unter Säuremagenta (Fuchsin S) und Amaranth (Naphtholrot S) ausgewählt ist.

2. Stabilisiertes Ammoniumnitrat nach Anspruch 1, dadurch gekennzeichnet, daß es 2 bis 5 Gew.-% Kaliumnitrat und 0,15 bis 0,5 Gew.-% der organischen Arylsulfonat-Verbindung enthält.

3. Verfahren zur Unterdrückung des Umwandlungspunkts des Ammoniumnitrats bei 32 °C durch Einbringen von Kaliumnitrat, dadurch gekennzeichnet, daß 1 bis 7 Gew.-% Kaliumnitrat und 0,1 bis 1 Gew.-% einer organischen Verbindung eingebracht werden, die mindestens eine Arylsulfonatgruppe enthält und unter Säuremagenta (Fuchsin S) und Amaranth (Naphtholrot S) ausgewählt ist.

4. Verfahren nach Anspruch 3, dadurch gekennzeichnet, daß das Einbringen des Kaliumnitrats und der organischen Arylsulfonat-Verbindung durch Einmischen in geschmolzenes Ammoniumnitrat vorgenommen wird.

5. Verfahren nach Anspruch 3, dadurch gekennzeichnet, daß das Einbringen durch Lösen der Bestandteile in Wasser unter Erhalt einer wäßrigen Lösung und anschließendes Verdampfen des Wassers vorgenommen wird.

6. Verfahren nach Anspruch 5, dadurch gekennzeichnet, daß die wäßrige Lösung versprüht wird und das so erhaltene Aerosol anschließend getrocknet wird.

## Claims

1. Ammonium nitrate stabilized by potassium nitrate, characterized in that it includes between 1 % and 7 % by weight of potassium nitrate and between 0.1 % and 1 % by weight of an organic compound having at least one arylsulfonate grouping, chosen from the group consisting of acid magenta and amaranth.

2. Stabilized ammonium nitrate according to claim 1, characterized in that it includes between 2 % and 5 % by weight of potassium nitrate and between 0.15 % and 0.5 % by weight of the arylsulfonate organic compound.

3. Process for suppressing the transition point of ammonium nitrate at 32°C by incorporating potassium nitrate, characterized in that there are incorporated between 1 % and 7 % by weight of potassium nitrate and between 0.1 % and 1 % by weight of an organic compound having at least one arylsulfonate grouping, chosen from the group consisting of acid magenta and amaranth.

4. Process according to claim 3, characterized in that the incorporation of potassium nitrate and the arylsulfonate organic compound is carried out by mixing into molten ammonium nitrate.

5. Process according to claim 3, characterized in that the incorporation is carried out by putting the constituents into aqueous solution and then evaporating the water.

6. Process according to claim 5, characterized in that the aqueous solution is atomized and the aerosol thus obtained is dried.
